# NEUE EUROPÄISCHE PATENTSCHRIFT

(11) **EP 0 221 015 B2**
(45) Veröffentlichungstag und Bekanntmachung des Hinweises auf die Entscheidung über den Einspruch: **27.10.1993**
(45) Hinweis auf die Patenterteilung: 09.05.1990
(21) Anmeldenummer: 86810434.0
(22) Anmeldetag: 02.10.1986
(51) Int. Cl.: B60P 1/44

(54) **Plattform, insbesondere Ladebordwand für Fahrzeuge**
Platform, particularly tailgate loading platform for vehicles
Plate-forme, particulièrement ridelle arrière de chargement

(30) Priorität: 25.10.1985 DE 3537938
(43) Veröffentlichungstag der Anmeldung: 06.05.1987
(73) Patentinhaber: ALUSUISSE-LONZA SERVICES AG, 8034 Zürich (CH)
(72) Erfinder: Niederholz, Josef, D-7705 Steisslingen (DE)

(56) Entgegenhaltungen:
- EP-A- 0 081 115
- EP-B- 0 138 818
- Prospekt ET 16/3M 06 74, Hrsg. Aluminium Münchenstein

## Beschreibung

Die Erfindung betrifft eine Plattform, insbesondere eine Ladebordwand für Fahrzeuge, nach dem Oberbegriff der unabhängigen Patentansprüche 1 und 2.

Durch die EP-A1 0 081 115 ist eine einseitig anhängbare Fahrzeug-Hubwand bekannt mit trogförmigem Anschlußprofil, das an seiner offenen Seite von den Enden der langgelegten Platfformprofile abgedeckt und mit abkragenden Anschlußlaschen ausgerüstet ist Letztere nehmen in Bohrungen oder Augen zum einen die Fahrzeug-Hubwand haltende Gelenkbolzen auf sowie zum anderen Teile eine hydraulische Hubeinrichtung. Es wird zudem vorgeschlagen, das trogförmige Anschlußprofil mittels Schrauben an den Enden der Plattformprofile festzulegen.

Diese sehr speziell konzipierte vorbekannte Konstruktion ist bei stranggepreßten Leichtmetall-Hohlprofilen nicht verwendbar; bei solchen bekannten Ladebordwänden werden - jene Anschlußlaschen aufweisende - Anschlußblöcke angeschweißt. Übliche Anschlußblöcke aus Stahl werden an den Leichtmetall-Hohlprofilen durch Verbindungsorgane gehalten.

Besondere Probleme ergeben sich am Übergang des Anschlußblocks zur eigentlichen Plattformfläche bezüglich der Einleitung von Kräften bei Kragbelastung, insbesondere im Hinblick auf die den jeweiligen Verhältnissen anzupassende Lage der Fahrfläche, welche von der im ausgeklappten Zustand nach oben weisenden Oberfläche der Plattform angeboten wird. Ein anderes Problem ergibt sich durch den Wunsch, die Anschlußblöcke auch nach längerem Gebrauch der Plattform von dieser lösen zu wollen.

Aus der EP-B- 0 138 818 ist eine Ladebordwand der eingangs erwähnten Art bekannt, wobei die tragende Verbindung zwischen Plattform profil und Anschlusskopf über einen beide Teile durchsetzenden gelenkbolzen erfolgt. Hierbei kann die Plattform gegen deren freie Schwenkbarkeit um den Gelenkbolzen über eine Arretierschraube am Anschlußkopf gesichert sein.

Angesichts dieser Gegenbenheiten hat sich der Erfinder die Aufgabe gestellt, Plattformen bzw. Ladebordwände der eingangs erwähnten Art bei Meidung der vorstehend genannten Mängel zu verbessern.

Zur Lösung dieser Aufgabe führen die kennzeichnenden Merkmale der Patentansprüche 1 und 2.

Bei einer ersten Variante der Erfindung liegt der Anschlußkopf mit der Sockel platte zumindest teilweise einer Gegenfläche des benachbarten Plattformprofils an und hintergreift einen Anschlag der Ladebordewand so, daß eine Fläche der Sockelplatte an einer zum freien Ende der Ladebordwand gerichteten Anschlagfläche anliegt. Dank dieser Maßgabe wird ein wesentlicher Teil der die Sockelplatte von dem auskragenden Plattformprofil zu trennen trachtenden Kräfte in jene Anschlagfläche abgeleitet.

Bei einer zweiten Variante der Erfindung steht der Anschlußkopf mit der Sockelplatte zumindest teilweise einer Gegenfläche des benachbarten Plattenprofils gegenüber, wobei zwischen Sockelplatte und Gegenfläche wenigstens ein Keilprofil eingefügt sowie von der/den Schraube/n durchsetzt ist, und wobei die Schraube/n in einem quer zum Schraubenschaft verlaufenden und in eine Quemut drehbar lagemden zylindrischen Futterstück festliegt/festiegen. Dank der beschriebenen Lagerung der Schraube/n ist die Anpaßung ihrer Lage ohne weiteres möglich, denn erfindungsgemäß können unterschiedliche oder mehrere leistenartige Keilprofile eingesetzt werden, um einen bevorzugt sich nach unten verjüngenden Winkel zwischen Anschlagkopf und Plattformprofil zu fixieren.

Die beiden beschriebenen Varianten dienen jeweils getrennt der Verbesserung der eingangs genannten Plattform, können jedoch auch gemeinsam eingesetzt werden.

Vorzugsweise greift eine Kopfplatte des Anschlußkopfes mit einem Vorsprung hakenartigen Querschnitts in eine entsprechende Einformung des Plattformprofils ein und schafft damit eine zusätzliche Verbindung zwischen den beiden miteinander lösbar verbundenen Vorrichtungsteilen.

Als günstig hat es sich erwiesen, die Sockel platte an ihre in Einbaulage oberen Kante der Anschlagfläche zuzuordnen, wobei der diese Kante benachbarte Bereich der Sockel platte gegen die Anschlagfläche in einem Winkel geneigt ist Die Anschlagfläche selbst ist mit einem Winkel von etwa 70° bis 80° jener Neigung des Kantenbereiches angepasst. Die bevorzugte Grösse dieses Winkels beträgt 76° bis 78°.

Jener obere Kantenbereich wird vorzugsweise durch eine Nasenleiste der Sockelplatte gebildet, wobei deren Mitte grösser ist als die Breite der Nasenleiste, so dass sich am Ansatz dieser Nasenleiste ein schulterartiger Absatz ergibt. Dieser begrenzt die Einschublänge der Nasenleiste in die sie aufnehmende Nut des Plattformprofils.

Bevorzugt verjüngt sich der Querschnitt der die Nasenleiste aufnehmenden Nut zu deren Nutboden hin, so dass bei zunehmender Einstecktiefe auch die Anpressung der Seitenwände der Nasenleiste an die Nutwände grösser wird. Um hier eine möglichst flächige Anlage von Nasenleisten-Seitenwand und Nutenwand zu erzielen, soll auch der Querschnitt der Nasenleiste sich zu deren Kopffläche hin verjüngen.

Die mit einer Unterfläche dem schulterartigen Absatz der Sockelplatte in einem Abstand gegenüberstehende Anschlagfläche kann von einem Vorsprung im Plattformprofil gebildet sein. Dieser Abstand ist gleich oder kleiner als der Abstand zwischen der Kopffläche der Nasenleiste einerseits und dem Nutenboden der Nut andererseits.

In die Nasenleiste bzw. deren Kopffläche greift eine das Plattformprofil von oben her durchsetzende Schraube ein, mit welcher jener Abstand zwischen Kopffläche und Nutboden festgelegt werden kann und mit diesem auch der in die Einsatznut eingreifende Abschnitt des Nasenleistenquerschnittes. Dies erlaubt infolgedessen eine Steuerung derVerbindungsintensität zwischen den beiden aneinander festliegenden Bauteilen Anschlusskopf/Plattformprofil. Dank der beschriebenen Konstruktion werden die wesentlichen Kräfte über die Nasenleiste in den Obergurt des Plattformprofiles eingeleitet - eine im unteren Bereich der Sockel platte vorgesehene Schraube verhindert lediglich ein ungewolltes Abheben, trägt aber zur Ableitung der Kräfte nicht viel bei. Diese Entlastung der Schraubverbindung ist ein wesentlicher Vorzug des beschriebenen Erfindungsgegenstandes.

Von wesentlicher Bedeutung ist die Verwendung der beschriebenen Sockel platte mit oberer Nasenleiste und unterer Verbindungsschraube einerseits und der dazu passenden Einsatznut andererseits für das Festlegen auskragender Kragplatten an einem Halteprofil.

Bevorzugte Ausführungsformen der Erfindung ergeben sich aus der nachfolgenden Beschreibung sowie anhand der Zeichnung; diese zeigt in
Fig. 1: eine Schrägsicht unter eine überfahrbare Ladebordwand;
Fig. 2: einen teilweisen Längsschnitt durch Fig. 1 nach deren Linie 11-11, in vergrösserter Darstellung;
Fig. 3: einen Querschnitt durch Fig. 2 nach deren Linie III-III;
Fig. 4: eine Sicht unter einen Teil der Fig. 2 nach deren Pfeil IV;
Fig. 5: eine der Fig. 2 etwa entsprechende Wiedergabe eines anderen Ausführungsbeispieles;
Fig. 6: eine weitere Ausführungsform eines Teils einer Ladebordwand im Längsschnitt;
Fig. 7: eine schematische Skizze zu Fig. 6 in gegenüber dieser vergrösserter Wiedergabe;
Fig. 8: eine weitere Ausführungsform eines Teils einer Ladebordwand im Längsschnitt.

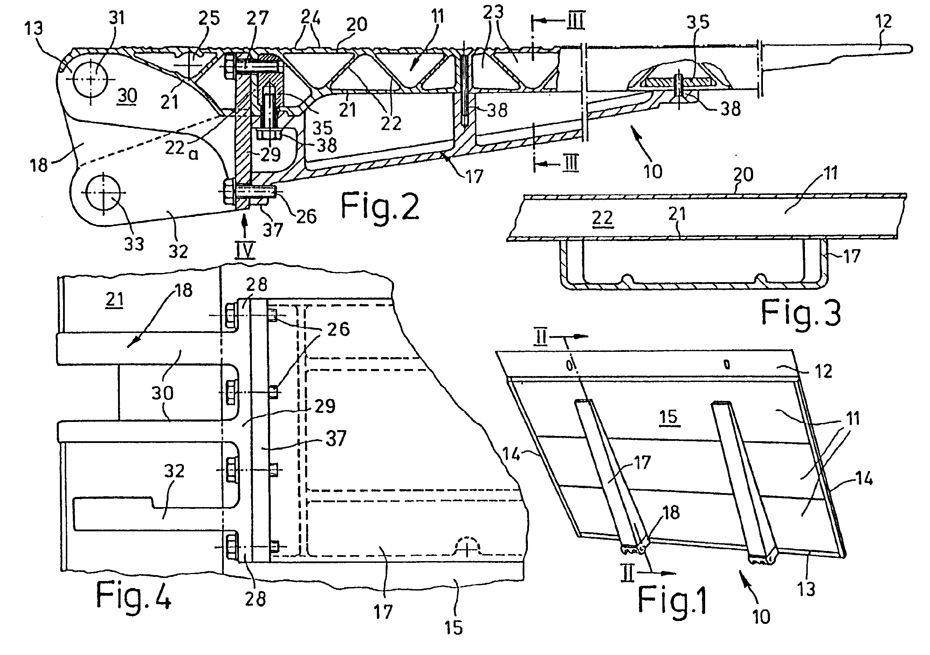

Eine in Fig. 1 schematisiert angedeutete Ladebordwand 10 besteht in der gewählten Ausführung aus drei Platfformprofilen 11, einer heckwärtigen Auffahrzunge 12, einem - zu einem nicht weiter dargestellten Lastwagenaufbau gerichteten Anschlussende 13 und seitlichen Abdeckelementen 14. An der Unterseite 15 der Ladebordwand 10 queren jene Plattformprofile 11 zwei Unterbauprofile 17 mit Anschlussköpfen 18.

Die Plattformprofile 11 sind aus Aluminium als stranggepresste Hohlkammerprofile gefertigt mit jeweils zwei Profilwänden 20,21, welche durch geneigte Querstege 22 verbunden sind und Kammem 23 begrenzen. Die obere Profilwand 20 ist an der Aussenfläche mit angeformten Querrippen 24 als Rutschsicherung versehen.

An dem in Fig. 2 links angedeuteten Anschlussende 13 endet die obere Profilwand 20 rinnenartig; die untere Profilwand 21 ist zur oberen Profilwand 20 unter Erzeugung einer Kammer 25 dreieckförmigen Querschnitts hinaufgeführt.

Der Anschlusskopf 18 besteht aus einem Strangpressprofil etwa E-förmigen Querschnitts mit einer - seitlich verlaufende Stege 28 bildenden - Sockelplatte 29, welche von Schrauben 26,27 durchsetzt ist. Hierzu sei vor allem auf Fig. 4 verwiesen.

Von der Sockelplatte 29 ragen Anschlusslaschen 30 mit Achsaugen 31 für einen nicht gezeigten Gelenkbolzen ab sowie wenigstens eine untere Lasche 32, in deren Augöffnung 33 eine - ebenfalls in der Zeichnung vernachlässigte - Hydraulikeinrichtung angreift.

Die oberen Schrauben 27 durchsetzen nach jener Sockel platte 29 einen Quersteg 22a des benachbarten Plattformprofiles 11 und enden in einem anschliessenden Futterstück 35. Die unteren Schrauben 26 greifen in einen Anschlagsteg des Unterbauprofils 17 ein, welches mittels quer zur Profilwand 21 gerichteter Schrauben 38 unterhalb letzterer festliegt.

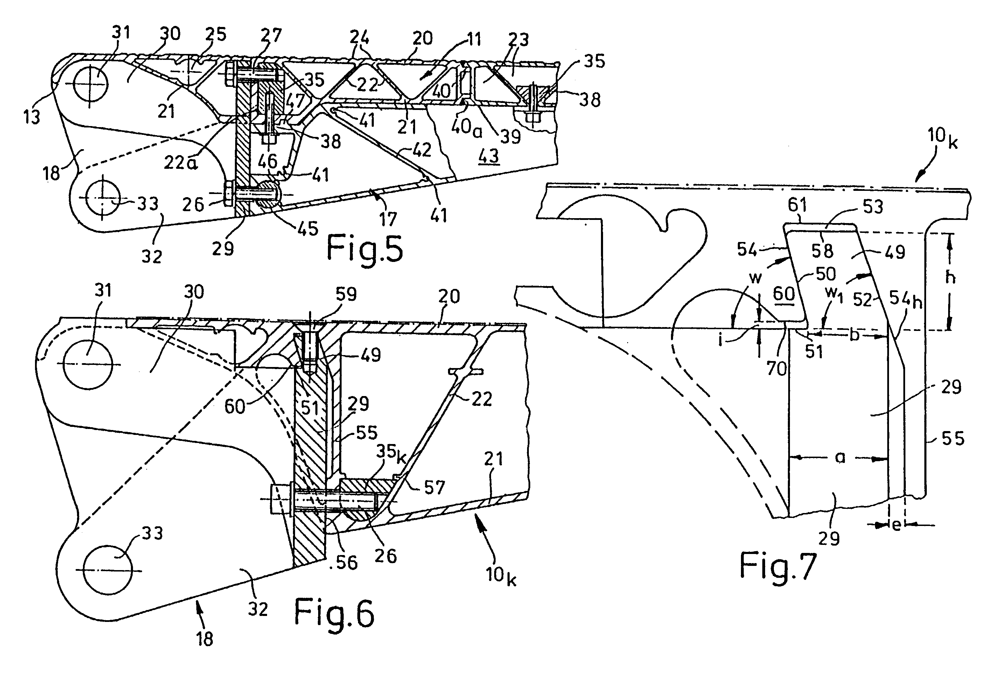

Fig. 5 zeigt zum einen einen Stoss 39 mit einander übergreifenden und verschweissten Längskanten 40,40ₐ zweier Plattformprofile 11 sowie zum anderen ein Unterbauprofil 17 mit Querstegen 42 und hinterschnittenen Nuten 41 aus angeformten Nasenstegen. Diese Nuten 41 nehmen nicht erkennbare Zapfen auf, welche von einer seitlichen Abdeckplatte 43 abragen - diese kann etwa aus Kunststoff oder Leichtmetall geformt sein und auf die Plattform profile 11 bzw. die Unterbauprofile 17 aufgeklipst werden.

Die untere Schraube 26 endet in Fig. 5 in einem zylindrischen Futterstück 45, welches in einer querschnittangepassten Quemut46 des Unterbauprofiles 17 drehbar lagert.

Während die vorstehend beschriebenen Unterbauprofile 17 angeschraubt sind sowie in die darüberliegenden Plattformprofile 11 mit Rippen 47 eingreifen, ist in Fig. 6,7 eine sich im Längsschnitt konisch zum Anschlusskopf 18 hin erweiternde Ladebordwand 10ₖ wiedergegeben. Hier ist die Sockelplatte 29 - mit einer Dicke a von 20 mm - an ihrem oberen Ende mit einer Nasenleiste 49 versehen, deren eine Seitenfläche 50 von einem schulterartigen Absatz 51 ausgeht und zu diesem in einem Winkel w von etwa 77° geneigt ist. Der Winkel _{W1} der anderen Seitenfläche 52 ist mit z.B. 73° etwas kleiner bemessen, so dass sich der Nasenquerschnitt aufwärts geringfügig verjüngt. Erweist an seiner Basis eine Breite b von etwa 15 mm auf, bei einer Höhe h von 20 mm.

Die Nasenleiste 49 lagert in einer Einsatznut 53 der Ladebordwand 1 Oₖ, wobei die heckwärtige Nutenwand, als Anschlagfläche 54ₕ ausgebildet, in eine Profilwand 55 übergeht und die zurAuffahrzunge 12 weisende Nutenwand eine Anschlagfläche 54 für die Nasenleiste 49 anbietet. Die Profilwand 55 verläuft in einem Abstand e zur Sockel platte 29, liegt ihr aber im Bereich der unteren Schraube 26 bei 56 an. Die Schraube 26 endet in einem Futterstück 35ₖ, welches durch Anschlagleisten 57 der Profilwand 55 und eines Quersteges 22 lagegesichert ist. In die Kopffläche 58 jener Nasenleiste 49 greift eine Schraube 59 ein, die in der oberen Profilwand 20 sitzt und ein Einstellen des Vertikalabstandes i zwischen Schulterabsatz 51 bzw. Kopffläche 58 der Nasenleiste 49 einerseits sowie der Unterfläche 70 eines Vorsprungs 60 des Plattformprofiles 11 bzw. eines Nutbodens 61 der Einsatznut 53 andererseits gestattet.

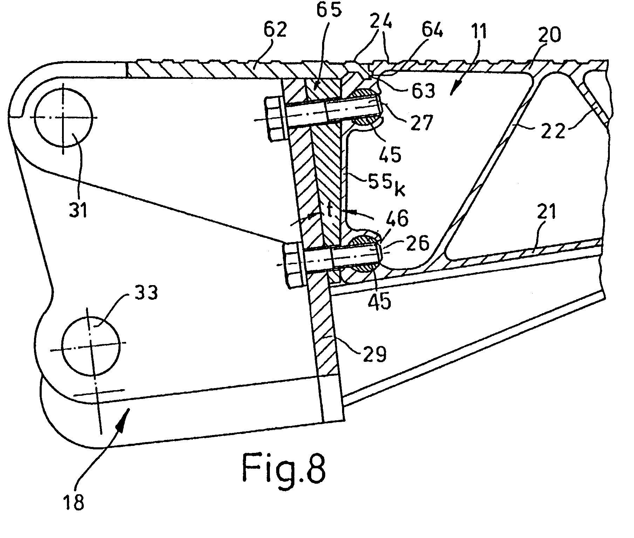

In Fig. 8 endet ein Plattformprofil 11 an einer Profilwand 55ₖ, übergreift also mit der oberen Profilwand 20 den Anschlusskopf 18 nicht; dieser ist mit einer Kopfplatte 62 versehen, welche mit der oberen Profilwand 20 etwa fluchtet und mit einem Hakenende 63 in eine einseitig hinterschnittene Rinne 64 der oberen Profilwand 20 eingesetzt ist. Die Sockelplatte 29 verläuft hier in einem Winkel t zur Profilwand 55ₖ geneigt. Diese geneigte Lage wird durch ein eingefügtes Keilprofil 65 ermöglicht, das von den Schrauben 26, 27 durchsetzt ist - letztere enden in zylindrischen Futterstücken 45 und sind also in ihrem Winkel zur Profilwand 55ₖ in Abhängigkeit vom Winkel t des gewählten leistenartigen Keilprofiles 65 einstellbar. Die Neigung des Anschlusskopfes 18 kann gegenüber jener Profilwand 55ₖ durch das Auswechseln des Keilpmfiles 65 verändert werden.

## Patentansprüche

1. Plattform, insbesondere Ladebordwand (10, 10ₖ) für Fahrzeuge, mit eine Fläche bildenden Plattformprofilen (11) sowie wenigstens einem an einer der Plattformkanten angebrachten Anschlußkopf (18) mit Ausnehmungen oderAugen (31, 33) aufweisenden Laschen (30, 32) für die Plattform haltende Gelenkbolzen, wobei der Anschlußkopf (18) mittels einer Sockel platte (29) mit einer Gegenfläche (22a, 56, 55ₖ) über Verbindungsorgane wie Schrauben an dem/den benachbarten Plattformprofilen (11) festgelegt ist und der Anschlußkopf (18) mit der Sockel platte (29) zumindest teilweise einer Gegenfläche (22a, 56) des benachbarten Plattformprofils (11) anliegt, dadurch gekennzeichnet, dass die Sockelplatte (29) einen Anschlag (60) der Ladebordwand (10, 10ₖ) so hintergreift, daß eine Fläche (50) der Sockelplatte (29) an einer zum freien Ende (12) der Ladebordwand (10, 10ₖ) gerichteten Anschlagsfläche (54) anliegt

2. Plattform, insbesondere Ladebordwand (10, 10ₖ) für Fahrzeuge, mit eine Fläche bildenden Plattformprofilen (11) sowie wenigstens einem an einer der Plattformkanten angebrachten Anschlußkopf (18) mitAusnehmungen oderAugen (31, 33) aufweisenden Laschen (30, 32) für die Plattform haltende Gelenkbolzen, wobei der Anschlußkopf (18) mittels einer Sockelplatte (29) mit einer Gegenfläche (22a, 56, 55ₖ) über Verbindungsorgane wie Schrauben an dem/den benachbarten Plattformprofilen (11) festgelegt ist und der Anschlußkopf (18) mit der Sockelplatte (29) zumindest teilweise einer Gegenfläche (55ₖ) des benachbarten Plattformprofils (11) gegenübersteht, dadurch gekennzeichnet, dass zwischen der Sockelplatte (29) und Gegenfläche (55ₖ) wenigstens ein Keilprofil (65) eingefügt sowie von der/den Schraube/n (26 und/oder 27) durchsetzt ist, wobei die Schraube/n in einem quer zum Schraubenschaft verlaufenden und in einer Quernut (46) drehbar lagernden zylindrischen Futterstück (45) festliegt/festliegen.

3. Plattform nach Anspruch 1, dadurch gekennzeichnet, daß die Sockelplatte (29) mit ihrer in Einbaulage oberen Kante (58) die Anschlagfläche (54) hintergreift, wobei der dieser Kante (58) benachbarte Bereich der Sockelplatte (29) gegen die Anschlagfläche (54) in einem Winkel (w) geneigt ist, welcher bevorzugt 70°-80° beträgt und der Neigung des Kantenbereichs angepaßt ist.

4. Plattform nach Anspruch 1 oder 3, dadurch gekennzeichnet, daß die Sockelplatte (29) eine in Einbaulage horizontal verlaufende Nasenleiste (49) aufweist, deren Breite (b) geringer ist als die Dicke (a) der Sockel platte (29) und welche unterhalb der Anschlagfläche (54) einen schulterartigen Absatz (51) herstellt.

5. Plattform nach Anspruch 4, dadurch gekennzeichnet, daß sich der Querschnitt der Nasenleiste (49) zu deren Kopffläche (58) und der Querschnitt der die Nasenleiste (49) aufnehmenden Einsatznut (53) zu deren Nutboden (61) hin verjüngen.

6. Plattform nach einem der Ansprüche 4 oder 5, dadurch gekennzeichnet, daß die Anschlagfläche (54) für die Nasenleiste (49) von einem Vorsprung (60) im Plattformprofil (11) gebildet ist, welcher mit einer Unterfläche (70) den schulterartigen Absatz (51) der Sockelplatte (29) in Abstand (i) gegenübersteht.

7. Plattform nach einem der Ansprüche 4 bis 6, dadurch gekennzeichnet, daß die Sockelplatte (29) mit ihrem in Einbaulage unteren Bereich durch wenigstens eine Schraube (26) an die benachbarte Profilwand (55) der/des Plattformprofile/s (11) angeschlossen ist, wobei die Schraube quer zur Ebene der Anschlagfläche (54) verläuft.

8. Plattform nach einem der Ansprüche 4 bis 7, dadurch gekennzeichnet, daß in die Kopffläche (58) der Nasenleiste (49) wenigstens eine das Plattformprofil (11) durchsetzende Schraube (59) eingreift, welche vorzugsweise etwa rechtwinklig zur Schraube (26) im unteren Bereich der Sockelplatte (29) verläuft.

9. Plattform nach Anspruch 2, dadurch gekennzeichnet, daß eine Kopfplatte (62) des Anschlußkopfes (18) mit einem Vorsprung (63) hakenartigen Querschnitts in eine entsprechende Einformung des Plattformprofils (11) eingreift.

## Claims

1. Platform, in particular loading tailboard (10, 10ₖ) for vehicles, with platform sections (11), which form a surface, and at least one connection block (18) which is arranged on one of the platform edges and has brackets (30, 32) which have recesses or eyes (31, 33) and are for the articulation pins which hold the platform, the connection block (18) being fixed to the adjacent platform section(s) (11) by means of a base plate (29) with an opposite surface (22a, 56, 55ₖ) via connection elements such as screws, and said connection block (18) bears with the base plate (29) at least partially against an opposite surface (22a, 56) of the adjacent platform section (11), characterised in that the base plate (29) engages behind a stop (60) of the loading tailboard (10, 10ₖ) in such a manner that a surface (50) of the base plate (29) bears against a stop surface (54) which faces towards the free end (12) of the loading tailboard (10, 10,).

2. Platform, in particular loading tailboard (10, 10ₖ) for vehicles, with platform sections (11), which form a surface, and at least one connection block (18) which is arranged on one of the platform edges and has brackets (30, 32) which have recesses or eyes (31, 33) and are for the articulation pins which hold the platform, the connection block (18) being fixed to the adjacent platform section(s) (11) by means of a base plate (29) with an opposite surface (22a, 56, 55ₖ) via connection elements such as screws, and said connection block (18) lies with the base plate (29) at least partially opposite an opposite surface (55ₖ) of the adjacent platform section (11), characterised in that between the base plate (29) and the opposite surface (55ₖ) at least one wedge section (65) is inserted and penetrated by the screw(s) (26 and/or 27), the screw(s) being fixed in a cylindrical filling piece (45) which runs transversely to the screw barrel and is rotatably mounted in a transversegroove (46).

3. Platform according to claim 1, characterised in that the base plate (29) engages with its, in the fitted position, upper edge (58) behind the stop surface (54), the area of the base plate (29) adjacent to this edge (58) being inclined towards the stop surface (54) at an angle (w) which is preferably 70° - 80° and adapted to the inclination of the edge area.

4. Platform according to claim 1 or 3, characterised in that the base plate (29) has an extension strip (49) which runs horizontally in the fitted position, the breadth (b) of which is smaller than the thickness (a) of the base plate (29) and which forms a shoulder-like step (51) below the stop surface (54).

5. Platform according to claim 4, characterised in that the cross-section of the extension strip (49) tapers towards its top surface (58) and the cross-section of the insertion groove (53), which receives the extension strip (49), tapers towards its groove bottom (61).

6. Platform according to one of the claims 4 or 5, characterised in that the stop surface (54) for the extension strip (49) is formed by a projection (60) in the platform section (11), a lower surface (70) of which projection lies at a distance (i) opposite the shoulder-like step (51) of the base plate (29).

7. Platform according to one of the claims 4 to 6, characterised in that the base plate (29) is connected with its, in the fitted position, lower area to the adjacent section wall (55) of the platform section(s) (11) by means of at least one screw (26), the screw running transversely to the plane of the stop surface (54).

8. Platform according to at least one of the claims 4 to 7, characterised in that at least one screw (59), which penetrates the platform section (11) and preferably runs approximately at right angles to the screw (26) in the lower area of the base plate (29), engages in the top surface (58) of the extension strip (49).

9. Platform according to claim 2, characterised in that a top plate (62) of the connection block (18) engages, with a projection (63) of hook-like cross-section, in a corresponding formed-in recess in the platform section (11).

## Revendications

1. Plate-forme, en particulier ridelle arrière de chargement (10, 10ₖ) pour véhicules automobiles, avec des profilés de plate-forme (11) formant une surface et au moins une tête de raccordement (18) disposée sur l'un des bords de la plate-forme avec des attaches (30, 32) présentant des évidements ou des oeillets (31, 33) pour les axes d'articulation maintenant la plate-forme, dans laquelle la tête de raccordement (18) est fixée sur le ou les profilés de plate-forme (11) voisins par l'intermédiaire d'organes de liaison tels que des vis au moyen d'une plaque de support (29) avec une contre-surface (22a, 56, 55ₖ) et la tête de raccordement (18) avec la plaque de support (29) s'appuie au moins en partie sur une contre-surface (22a, 56) du profilé de plate-forme (11) voisin, caractérisée en ce que la plaque de support (29) s'accroche sur une butée (60) de la ridelle arrière de chargement (10, 10ₖ) de telle façon qu'une surface (50) de la plaque de support (29) s'appuie sur une surface de butée (54) dirigée vers l'extrémité libre (12) de la ridelle arrière de chargement (10, 10ₖ).

2. Plate-forme, en particulier ridelle arrière de chargement (10, 10ₖ) pour véhicules automobiles, avec des profilés de plate-forme (11) formant une surface et au moins une tête de raccordement (18) disposée sur l'un des bords de la plate-forme avec des attaches (30, 32) présentant des évidements ou des oeillets (31, 33) pour les axes d'articulation maintenant la plate-forme, dans laquelle la tête de raccordement (18) est fixée sur le ou les profilés de plate-forme (11) voisins par l'intermédiaire d'organes de liaison tels que des vis au moyen d'une plaque de support (29) avec une contre-surface (22a, 56, 55ₖ) et la tête de raccordement (18) avec la plaque de support (29) est située au moins en partie en face d'une contre-surface (55ₖ) du profilé de plate-forme (11) voisin, caractérisée en ce qu'au moins un profilé en coin (65) est inséré entre la plaque de support (29) et la contre-surface (55ₖ) et est traversé par la ou les vis (26 et/ou 27), la ou les vis étant reçues dans une pièce de garniture (45) cylindrique qui s'étend transversalement par rapport à l'axe de la vis et qui est située de façon à pouvoir tourner dans une rainure transversale (46).

3. Plate-forme selon la revendication 1, caractérisée en ce que la plaque de support (29) s'accroche sur la surface de butée (54) par son bord supérieur (58) en position montée, la partie de la plaque de support (29) voisine de ce bord (58) étant inclinée par rapport à la surface de butée (54) suivant un angle (w) qui est de préférence de 70 à 80° et qui est adapté à l'inclinaison de la partie du bord.

Plate-forme selon la revendication 1 ou 3, caractérisée en ce que la plaque de support (29) présente une nervure à tenon (49) qui s'étend horizontalement en position montée, dont la largeur (b) est inférieure à l'épaisseur (a) de la plaque de support (29) et qui produit un retrait (51) en forme d'épaulement sous la surface de butée (54).

Plate-forme selon la revendication 4, caractérisée en ce que la section transversale de la nervure à tenon (49) se rétrécit en direction de sa surface de tête (58) et en ce que la section transversale de la rainure d'insertion (53) qui reçoit la nervure à tenon (49) se rétrécit en direction de son fond (61).

Plate-forme selon l'une des revendications 4 ou 5, caractérisée en ce que la surface de butée (54) pour la nervure à tenon (49) est constituée par une saillie (60) du profilé de plate-forme (11) qui, au niveau d'une surface inférieure (70), est située en face du retrait en forme d'épaulement (51) de la plaque de support (29) en étant séparée de celui-ci d'une distance (i).

Plate-forme selon l'une des revendications 4 à 6, caractérisée en ce que la plaque de support (29) est reliée au niveau de sa partie inférieure en position montée par au moins une vis (26) à la paroi de profilé (55) voisine du ou des profilés de plate-forme (11), la vis s'étendant transversalement par rapport au plan de la surface de butée (54).

Plate-forme selon l'une des revendications 4 à 7, caractérisée en ce que dans la surface de tête (58) de la nervure à tenon (49) pénètre au moins une vis (59) qui traverse le profilé de plate-forme (11) et qui s'étend de préférence approximativement à angle droit par rapport à la vis (26) située dans la partie inférieure de la plaque de support (29).

Plate-forme selon la revendication 2, caractérisée en ce qu'une plaque de tête (62) de la tête de raccordement (18) pénètre par une saillie (63) de section transversale en forme de crochet dans une structure correspondante du profilé de plate-forme (11).
